# EUROPEAN PATENT APPLICATION

(11) **EP 1 548 363 A2**
(43) Date of publication of application: **29.06.2005**
(21) Application number: 04029268.2
(22) Date of filing: 10.12.2004
(51) Int. Cl.: F23R 3/56, F23C 11/04, F02C 3/16, H02K 7/18, F16C 39/06, F23R 3/50, B81B 7/00, F02K 7/00

(54) **Rotary combuster, and electricity generator comprising such a combuster**

(30) Priority: 24.12.2003 IT TO20031041
(71) Applicant: C.R.F. Società Consortile per Azioni, 10043 Orbassano (TO) (IT)
(72) Inventor: Perlo, Pietro, 10043 Orbassano (TO) (IT); Innocenti, Gianfranco, 10043 Orbassano (TO) (IT); Kotelnikov, Andrei, 10043 Orbassano (TO) (IT); Li Pira, Nello, 10043 Orbassano (TO) (IT); Brignone, Mauro, 10043 Orbassano (TO) (IT); Lambertini, Vito, 10043 Orbassano (TO) (IT)
(74) Representative: Quinterno, Giuseppe

(57) **Abstract**

The combustor (1) comprises a stationary structure (2), and at least one annular rotor supported rotatably about a shaft (4) by contactless suspension means (5-8). The rotor (3) comprises a first and a second main annular portions (3', 3'') which are interconnected by an intermediate annular portion (103) and in each of which there is defined a combustion chamber (20', 20'') that has a directed lateral opening (22, 24) for the ejection of the combustion gases. Each combustion chamber (20', 20'') has an injector (31', 31'') of fuel and oxidizer and an igniter (32', 32'') which extend through a circular opening (50) in the said intermediate annular portion (103) of the rotor (3). The injectors (31', 31'') and the associated igniters (32', 32'') extend through narrow circular slits (30', 30'') defined between each main annular portion (3', 3'') and the intermediate portion (103) of the rotor.

This intermediate portion (103) communicates with the region outside the rotor (3) through a circularly extending radial exhaust nozzle (60) of convergent-divergent type connected to the said circular opening (50) and having in cross section the shape of a De Laval nozzle.

## Description

The present invention relates to an innovative combustor of rotary type, usable for example as a motor, particularly for driving an electricity generating machine, such as a dynamo in a fuel-fired power station.

The rotary combustor according to the invention comprises
- a stationary structure,
- at least one rotor of circular annular general shape, supported by the said structure rotatably about a shaft by contactless suspension means; the rotor comprising a first and a second main annular portion, which are interconnected by an intermediate annular portion and in each of which there is defined at least one combustion chamber that has at least one directed lateral opening for the ejection of the combustion gases; each combustion chamber having respective controlled injector means of fuel and oxidizer and corresponding igniter means, supported by support means which are fixed in operation and extend through a circular opening in the said intermediate annular portion of the rotor; the injector means and the associated igniter means extending through respective narrow circular slits defined between each main annular portion and the intermediate portion of the rotor,
the said intermediate portion of the rotor communicating with the region outside the rotor through a circularly extending radial exhaust nozzle of convergent-divergent type connected to the circular opening of the said intermediate portion of the rotor, and having in cross section the shape of a De Laval nozzle; and
control means designed to control the said injector means and the associated igniter means in predetermined ways, in such a way as to bring about the generation of a detonation wave that propagates through the said at least one chamber of each of the abovementioned main annular portions of the rotor, and bring about in a corresponding way a rotation at controlled velocity of the rotor due to the thrust produced by the combustion gases emitted through the lateral exhaust openings of the said combustion chambers.

The arrangement of a circularly extending radial exhaust nozzle having a cross section in the form of a De Laval nozzle, connected to the circular opening of the intermediate portion of the rotor makes it possible greatly to limit the losses or waste from inside the rotor to the outside.

Other features and advantages of the invention will be made apparent in accordance with the following detailed description, presented purely by way of non-limiting example, with reference to the appended drawings, in which:
Figure 1 is a plan view of a first rotary combustor according to the present invention;
Figure 2 is a sectional view essentially on the plane marked II-II in Figure 1;
Figure 3 is a partial sectional view showing an alternative embodiment of contactless suspension means for the combustor rotor according to the invention; and
Figure 4 is a partial sectional view showing an alternative embodiment of a combustor according to the invention.

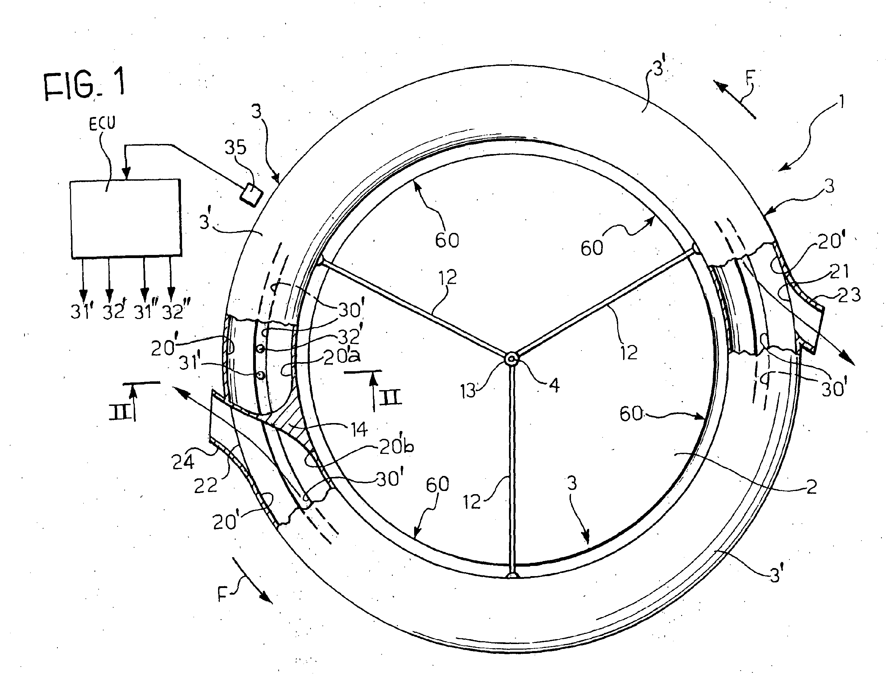

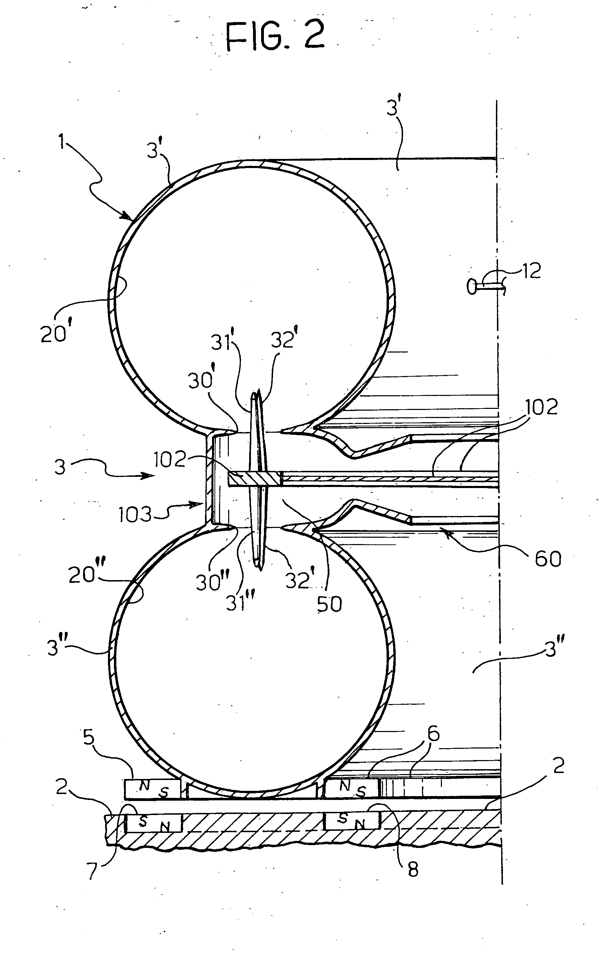

In Figures 1 and 2, reference 1 is a general reference for a rotary combustor according to the present invention.

This combustor 1 comprises a stationary structure, shown schematically in Figure 2, where it is marked 2.

In the illustrative embodiments shown in Figures 1 to 3 the rotary combustor 1 also comprises a tubular rotor 3 of circular annular shape. This rotor 3 is supported rotatably about a shaft 4 by contactless suspension means. In the embodiment illustrated, these suspension means comprise annular permanent magnets 5 and 6 mounted on the rotor 3 and magnetized in a direction parallel to the shaft 4, both having the same magnetic polarity, for example "south", pointing downwards. Facing the annular magnets 5 and 6 mounted on the rotor 3 are corresponding annular magnets 7 and 8 mounted on the stationary structure 2. The magnets 7 and 8 are also magnetized parallel to the shaft 4, their upward polarity being the same as that presented by the magnets 5 and 6, for example "south".

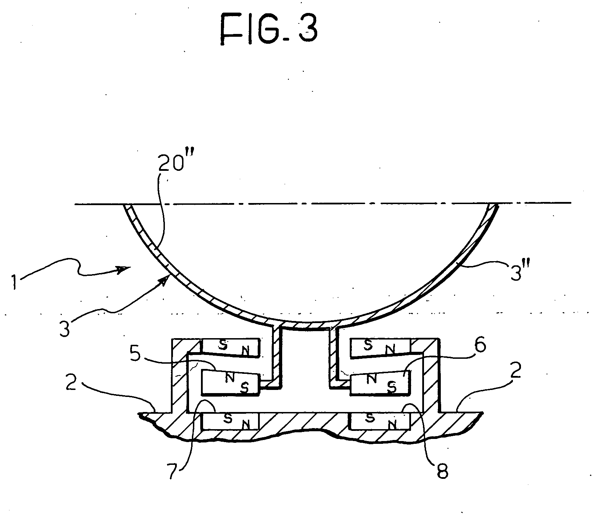

The magnetic suspension arrangement described above is, in its simplicity and schematic nature, purely indicative. Contactless suspension schemes, particularly of magnetic type, made by techniques known per se, can be adopted for the suspension of the rotor 3 relative to the stationary structure 2. A possible alternative embodiment is shown for example in Figure 3, in which the magnets 5 and 6 mounted on the rotor 3 are interposed between the magnets 7 and 8, already described, of the stationary structure 2 and additional magnets 9 and 10, also mounted on the stationary structure 2 but on the opposite side of the magnets 7 and 8 from the magnets 5 and 6. The mutually opposed polarities of the magnets 5, 6 on the one hand and 9, 10 on the other are the same, for example all "north".

Other ways of providing contactless suspensions, particularly of magnetic type, are described for example in the earlier European patent application No. 04017945.9 filed in the name of the same Applicant on 29 July 2004, relating to a "flying machine".

Referring to Figures 1 and 2, in the embodiment illustrated the rotor 3 is connected to a plurality of spokes 12 which are interconnected in the centre to a hub 13 mounted rotatably about the shaft 4.

As can be seen in Figure 2 the rotor 3 comprises two main annular portions 3' and 3'' of essentially circular cross section: these are vertically superposed and are interconnected by an intermediate annular portion 103.

Defined with each of the main annular portions 3', 3'' is at least one curved combustion chamber 20', 20''. In the embodiment illustrated by way of example (Figure 1) each main portion 3', 3'' of the rotor 3 defines in its interior a single combustion chamber 20', 20'' which extends essentially all the way around the circumference of the rotor. Each of these chambers, as shown in Figure 1 for the upper chamber 20', has an initial end 20'a and an end 20'b which are adjacent to each other and separated by a shaped dividing structure marked 14.

Each of these combustion chambers has an intermediate lateral opening 21, and a terminal lateral opening 22 for the ejection of the combustion gases. Connected to these openings are respective exhaust nozzles 23 and 24, suitably shaped in a manner known per se and both oriented in the same direction about the axis of rotation 4.

The intermediate opening 21 and the associated exhaust nozzle 23 have a (minimum) cross section smaller than the (minimum) cross section of the terminal opening 22 and of the associated exhaust nozzle 24. The cross sections of the said openings and of the associated exhaust nozzles are determined in such a way that in operation the reactive thrusts produced by the ejection of the combustion gases through the said openings are substantially balanced.

The combustion chamber 20', 20'' of each main portion 3', 3'' of the rotor has its own controlled injector 31', 31'', for injecting fuel and oxidizer, and an associated igniter 32', 32''. These injectors 31', 31'' and the associated igniters 32', 32'' are mounted on a support structure 102 (Figure 2) which is fixed in operation and extends partly into the intermediate annular portion 103 of the rotor 3 through a circular opening 50 in the latter.

The said injectors and igniters extend into the combustion chambers 20', 20'' through respective narrow circular slits 30', 30'' defined between each main annular portion 3' and 3'' and the intermediate portion 103 of the rotor.

The region inside the intermediate annular portion 103 of the rotor 3 communicates with the external region through the circular opening 50, and through a circularly extending radial exhaust nozzle 60 of convergent-divergent type connected to the said circular opening 50 and having in cross section the shape of a De Laval nozzle (see in particular Figure 2), such as to generate a localized condition of practically zero pressure in the vicinity of the smallest cross section of the nozzle that will not allow the fuel-oxidizer mixture to escape from the combustion chamber. The fuel and the oxidizer may be hydrogen and oxygen or, more generally, combinations of hydrocarbons and air in proportions known for systems operating under detonation conditions, particularly conditions of pulsed detonation.

The rotary combustor 1 has an electronic control unit, marked ECU in Figure 1. This unit is designed to control, using interface devices known per se, the injectors 31', 31'' and the igniters 32', 32'' in predetermined ways, so as to trigger combustion reactions in the chambers 20', 20'' that will propagate themselves in the said chambers at supersonic speed, in other words generating actual detonation waves. The ejection of the exhaust gases through the nozzles 23 and 24 of the combustion chambers causes by reaction a rotation of the rotor 3 in the direction indicated by the arrows F in Figure 1.

Advantageously the speed of rotation of the rotor can be controlled by the ECU unit in a closed loop, depending on the actual speed of rotation of the rotor sensed by means of a sensor 35 (Figure 1) of a type known per se.

Advantageously, in order to ensure that the combustion reaction in the chambers 20', 20'' takes place by detonation rather than mere deflagration, the length of the said chambers is greater than or equal to approximately 40 times the mean transverse dimension of these chambers, and is preferably between 40 and 100 times this mean transverse dimension.

Various different alternative embodiments to the embodiment described above are possible.

In a first alternative not shown, there may be defined in each main portion 3', 3'' of the rotor a plurality of adjacent and separate curved combustion chambers, each of which has at least one terminal lateral opening for the exhaust gases to escape through.

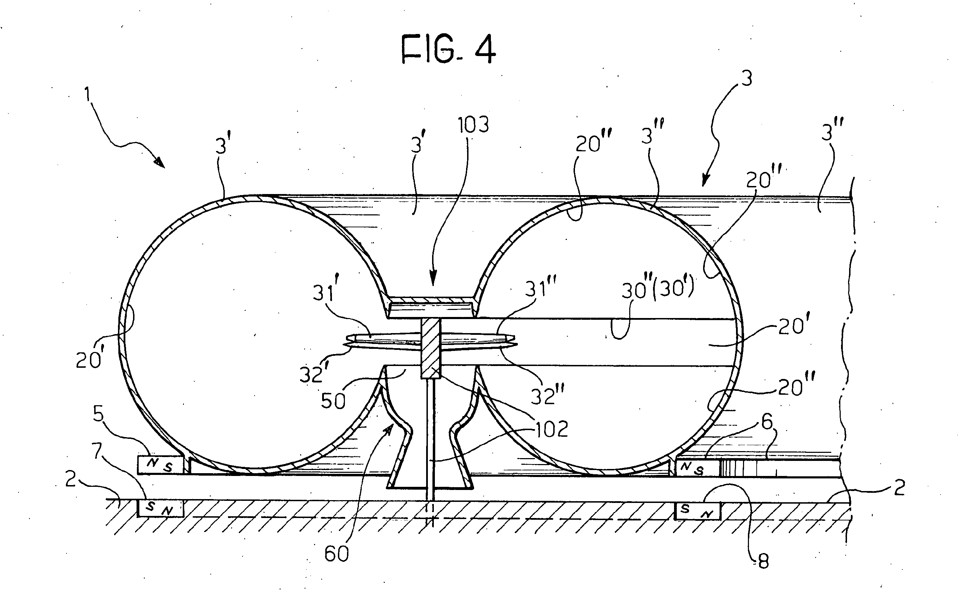

In another alternative embodiment, illustrated in Figure 4, the rotor 3 has its two portions 3', 3'' radially interlocking. In Figure 4, parts and elements that are the same as or substantially correspond to components already described are given the same reference numbers again. In the alternative embodiment shown in Figure 4 the injectors 31', 31'' and the associated igniters 32', 32'' extend horizontally and are mounted on a support structure 102 which is fixed in operation and connected to the stationary structure 2.

The intermediate portion 103 of the rotor 3 communicates with the region outside the rotor through its circular opening 50 to which is connected a circularly extending radial exhaust nozzle 60 having the characteristics already described above in relation to Figure 2.

In Figure 4 the exhaust nozzle 60 is shown pointing downwards, but it will be obvious that it can as an alternative be on the opposite side of the intermediate structure 103, and therefore pointing upwards.

As before, in the embodiment shown in Figure 4 the main portions 3', 3'' of the rotor 3 each comprise an individual combustion chamber, or a plurality of separate adjacent curved combustion chambers.

The rotary combustors constructed in accordance with the present invention can be used as micromotors, particular for driving electricity generating machines. In these applications, in a manner not shown, the rotor of a combustor of the types described above is connected to the rotor of such an electricity generating machine.

Advantageously, at least some of the magnets used for the suspension of the rotor of a rotary combustor according to the invention can also be used synergistically as the induction part of such an electricity generating machine.

Clearly, without departing from the principle of the invention, the actual forms and details of embodiment can be made very different from those described and illustrated purely by way of non-limiting example, without thereby departing from the scope of the invention as defined in the accompanying claims.

## Claims

1. Rotary combustor (1) comprising
- a stationary structure (2),
- at least one rotor (3) of circular annular general shape, supported by the said structure (2) rotatably about a shaft (4) by contactless suspension means (5-8); the rotor (3) comprising a first and a second main annular portions (3', 3'') which are interconnected by an intermediate annular portion (103) and in each of which there is defined at least one combustion chamber (20', 20'') that has at least one directed lateral opening (22, 24) for the ejection of the combustion gases; each combustion chamber (20', 20'') having respective controlled injector means (31', 31'') of fuel and oxidizer and igniter means (32', 32''), supported by support means (102) which are fixed in operation and extend through a circular opening (50) in the said intermediate annular portion (103) of the rotor (3); the said injector means (31', 31'') and the associated igniter means (32', 32'') extending through respective narrow circular slits (30', 30'') defined between each main annular portion (3', 3'') and the intermediate portion (103) of the rotor,
the said intermediate portion (103) communicating with the region outside the rotor (3) through a circularly extending radial exhaust nozzle (60) of convergent-divergent type connected to the said circular opening (50) and having in cross section the shape of a De Laval nozzle; and
control means (ECU; 35) designed to control the said injector means (31', 31'') and the associated igniter means (32', 32'') in predetermined ways, in such a way as to generate a detonation wave that propagates through the said at least one chamber (20', 20'') and bring about a rotation at controlled velocity of the rotor (3) due to the thrust produced by the combustion gases emitted through the said at least one lateral exhaust opening (22, 24).

2. Rotary combustor according to Claim 1, in which there is defined in each main annular portion (3', 3'') of the rotor (3) a single circular combustion chamber (20', 20'') with an initial end (20'a) and a final end (20'b), these ends being adjacent to each other and separated by a dividing structure (14); the said at least one lateral exhaust opening (22, 24) being formed in the final end (20'b) of each of the said chambers (20', 20'').

3. Rotary combustor according to Claim 1, in which there is defined in each main portion (3', 3'') of the rotor (3) a plurality of combustion chambers that are separate and adjacent, each of which is provided with at least one lateral directed exhaust opening (22, 24).

4. Rotary combustor according to Claim 2 or 3, in which the said at least one combustion chamber (20', 20'') of each main portion (3', 3'') of the rotor (3) has at least one other lateral exhaust opening (21; 23) in an intermediate position between the ends (20'a, 20'b) of the chamber; the said at least one other exhaust opening (21, 23) having a (minimum) cross section smaller than the (minimum) cross section of the terminal exhaust opening (22, 24).

5. Rotary combustor according to any one of the preceding claims, in which the said stationary structure comprises a central rotational support (4), and in which the said rotor (3) comprises a central hub (30) mounted rotatably about the shaft of the rotational support of the said stationary structure (2).

6. Rotary combustor according to any one of the preceding claims, in which the said at least one combustion chamber (20', 20'') of each main portion (3', 3'') of the rotor (3) has a length greater than or equal to approximately 40 times the mean transverse dimension of the chamber.

7. Rotary combustor according to any one of the preceding claims, in which the said contactless suspension means are magnetic suspension means.

8. Rotary combustor according to Claim 7, in which the said suspension means comprise a plurality of permanent magnets.

9. Rotary combustor according to any one of the preceding claims, in which the said main portions (3', 3'') of the rotor (3) are arranged vertically one above the other.

10. Rotary combustor according to any one of Claims 1 to 8, in which the said main portions (3', 3'') of the rotor are radially interlocking.

11. Electricity generator comprising a stator, and a rotor connected to a rotary combustor according to any one of the preceding claims.

12. Electricity generator according to Claim 11, including a rotary combustor according to Claim 7 or 8, and in which magnets of the abovementioned suspension means are used as the induction part of the generator.
